# EUROPEAN PATENT APPLICATION

(11) **EP 1 380 857 A1**
(43) Date of publication of application: **14.01.2004**
(21) Application number: 02720470.0
(22) Date of filing: 17.04.2002
(51) Int. Cl.: G02B 1/10, B32B 9/00, B32B 7/02, G09F 9/00

(54) **ANTIREFLECTION FILM AND ANTIREFLECTION LAYER-AFFIXED PLASTIC SUBSTRATE**

(30) Priority: 17.04.2001 JP 2001118463; 19.11.2001 JP 2001353265; 18.03.2002 JP 2002074033
(71) Applicant: Sony Corporation, Tokyo 141-0001 (JP)
(72) Inventor: KOBAYASHI, Tomio, Shinagawa-ku, Tokyo 141-0001 (JP); WATANABE, Shujiro, Shinagawa-ku, Tokyo 141-0001 (JP); WATANABE, Takashi, Shinagawa-ku, Tokyo 141-0001 (JP); KAGAWA, Masaki, Shinagawa-ku, Tokyo 141-0001 (JP); ISHIZAKI, Haruo, Shinagawa-ku, Tokyo 141-0001 (JP); LEE, Sung-Kil, Shinagawa-ku, Tokyo 141-0001 (JP)
(74) Representative: Thévenet, Jean-Bruno
(86) International application number: PCT/JP2002/003825
(87) International publication number: WO 2002/086559

(57) **Abstract**

A highly transparent, colorless anti-reflection film and a plastic substrate with the anti-reflection layer that offers superior productivity. Furthermore, an anti-reflection film and a plastic substrate with the anti-reflection layer offering superior optical characteristics and resistance to moisture and gases. An anti-reflection film is made of a hard-coat layer formed on a substrate and transparent, high index of refraction oxide layers and transparent, low index of refraction oxide layers laminated on top of each other on the hard-coat layer. The transparent, high index of refraction oxide layers comprises Nb₂O₅ layers formed by a reactive ion sputtering method. Furthermore, in the anti-reflection film using a substrate composed of an organic material, an inorganic moisture barrier layer, having an index of refraction similar to the organic material, is formed in contact with one side of the substrate.

## Description

### Technical Field

The present invention relates to an anti-reflection film comprising transparent, high index of refraction oxide layers and transparent, low index of refraction oxide layers that are laminated on top of each other on a substrate, as well as a plastic substrate with an anti-reflection layer, having the anti-reflection layer.

### Background Art

An anti-reflection (anti-reflection, or heretofore AR in abbreviation) film is formed on a display surface of a CRT or an LCD (liquid crystal display element) and is used for preventing an external light from being reflected in order to make the display easier to see and to enhance contrast to improve image quality. A conductive layer is provided to the AR film so as to introduce an antistatic effect and an electromagnetic shielding effect for keeping dust from adhering and for contributing overall environmental protection.

An example of a CRT application is described in the Japanese Patent Application Publication Laid Open H11-218603, the Japanese Patent Application Publication Laid Open H9-80205, and H. Ishikawa et al. / Thin Solid Films 351 (1999) 212-215, with a hard-coat layer formed on a PET (polyethylene terephthalate) base and an AR layer, having a laminated structure which comprises, for example, SiOₓ / ITO / SiO₂ / ITO / SiO₂ or SiOₓ / TiNₓ (x = 0.3-1) / SiO₂, on top.

On the other hand, AR films known for use on an LCD surface include structures that use TiO₂ and offer a high degree of transparency, such as, for example, a base / SiOₓ / TiO₂ / SiO₂ / TiO₂ / SiO₂ or a base / SiOₓ / TiO₂ / SiO₂ / TiO₂ / Al₂O₃ / SiO₂.

Each of the layers that makes up the AR film is deposited by sputtering. Considering the rates of deposition, a structure that includes ITO sputtered layers, such as SiOₓ / ITO / SiO₂ / ITO / SiO₂, offers a superior productivity compared with a structure using TiO₂ sputtered layers. When a film is deposited using a sputtering system for films, the maximum possible length of deposition along a direction in which a film runs along a main roller in a sputtering chamber, or a length across which a cathode can be attached, would be limited. When a comparison is made for identical lengths of film-runs, a ratio of deposition rates between the ITO and TiO₂ would be approximately three to one. Furthermore, when a comparison made at an identical sputtering power density, a deposition rate for the TiO₂ would be one-third to one-sixth of the ITO. These deposition rates are achieved with the ITO from a standpoint of ensuring both transparency and conductance. If transparency were not an issue, the difference in rates would be even larger.

A lower deposition rate for the TiO₂ is largely due to a fact that a sputtering rate for Ti is much smaller than for In or Sn, which are elements that make up the ITO.

As described above, the ITO film offers a superior productivity compared with the TiO₂ film, but an AR film using ITO films, for example, an AR film that comprises a base / SiOₓ : 4 nm / ITO : 18 nm / SiO₂ : 32 nm / ITO : 60 nm / SiO₂ : 95 nm, has a shortcoming of being slightly yellowish, despite being transparent. In a CRT application, it is possible to reduce the effect of the yellow color in the AR layer by adjusting the RGB cathode currents in such a way as to overcome the yellowish tint to a certain degree even if the AR film is tinted yellowish. However, it is not easy to adjust for a color in the AR film in a case of an LCD. An adjustment would be required for the color filter and others. For this reason, TiO₂ continues to be used as a transparent, high index of refraction material, despite a slower rate of deposition, making the AR film expensive. Furthermore, a prescribed level of conductance is required for an antistatic effect on the surface in, for example, an LCD application or an organic EL display application, but the TiO₂ layer cannot accommodate such a requirement.

On the other hand, an AR film having a conventional structure does not keep out moisture or act as an adequate gas barrier in an application such as the organic EL display, and the AR film must be combined with a glass substrate, for example. For example, a surface-light emitting organic EL device is manufactured by depositing an organic light emitting layer and electrodes on a TFT glass device substrate. In other words, an electrode layer made of a light-reflecting material, an organic layer (buffer layer + hole transport layer + organic light emitting layer included), a semi-transparent reflecting layer, and a transparent electrode are deposited one after the other on a TFT glass device substrate, and a glass substrate is bonded with a UV curable adhesion resin layer to seal the organic EL device area. Finally, an organic EL display having a superior color display is completed by pasting an anti-reflection film through an adhesive layer on top of the glass substrate.

The two-step process for adhesion for bonding the glass substrate and for bonding the AR film, when sealing the organic EL device area, is complicated and increases the manufacturing costs. Furthermore, the use of the glass substrate makes it difficult to achieve a lighter weight or a thinner form factor and becomes an impediment to developing a flexible display.

The present invention has been made for addressing these issues faced by the prior art. Its objective is to provide a highly transparent, colorless anti-reflection film and a plastic substrate with an anti-reflection layer for a higher productivity using a metallic oxide film that can be sputtered at high speed.

Another objective of the present invention is to provide a highly transparent, colorless, and conductive anti-reflection film and a plastic substrate with the anti-reflection film using a metallic oxide film that can be sputtered at high speed.

Furthermore, the final objective of the present invention is to provide an anti-reflection film and a plastic substrate with an anti-reflection layer that resists humidity, acts as a gas barrier, offers superior optical characteristics, and does not require a complex adhesion process.

### Disclosure of the Invention

The invention of Claim 1 is an anti-reflection film comprising a hard-coat layer formed on a substrate, and transparent, high index of refraction oxide layers and transparent, low index of refraction oxide layers which are laminated on top of each other on this hard-coat layer, and is characterized in that at least one of the transparent, high index of refraction oxide layers comprises an Nb₂O₅ layer formed by a reactive sputtering method.

In the invention of Claim 1, the Nb₂O₅ film is formed by a reactive sputtering method using an Nb target as the transparent, high index of refraction oxide layer. Accordingly, it is possible to obtain a colorless, highly transparent anti-reflection film similar to a film using TiO₂, having a high degree of transparency and a small deviation in spectral transmittance, of less than or equal to 10%, across the visible-light wavelengths ranging from 400 to 650 nm, and to achieve a deposition rate with the Nb₂O₅ film that is two to three times that of the TiO₂ film. As a result, an anti-reflection film that is cheaper and offering a higher productivity than a film using TiO₂ can be obtained.

The invention in Claim 2 is characterized in that an oxide layer comprising at least one material selected from a group of ZrOₓ (where x = 1-2), TiOₓ (where x = 1-2), SiOₓ (where x = 1-2), SiOₓN_{y} (where x = 1-2, y = 0.2-0.6) and CrOₓ (where x = 0.2-1.5), is formed by a reaction sputtering method on the hard-coat layer formed on the substrate in the anti-reflection film of Claim 1.

In the invention of Claim 2, an adhesion to the hard-coat layer can be enhanced a highly reliable anti-reflection film having superior hardness and adhesion strength can be obtained by forming a hard-coat layer on the substrate and then forming on a top thereof the oxide layer comprising at least one material selected from a group of ZrOₓ (where x = 1-2), TiOₓ (where x = 1-2), SiOₓ (where x = 1-2), SiOₓN_{y} (where x = 1-2, y = 0.2-0.6) and CrOₓ (where x = 0.2-1.5) by using the reactive sputtering method with a metallic or alloy target, such as Zr, Ti, Si, or Cr.

An invention of Claim 3 is characterized in that in the anti-reflection film of Claim 1, at least one of the other transparent, high index of refraction oxide layers is a film composed of at least one type of metallic oxide selected from In₂O₃ and SnO₂, as well as a film composed of Nb₂O₅.

In the invention of Claim 3, a colorless, transparent anti-reflection film, having an antistatic effect, can be obtained by making the film conductive without affecting transparency by forming the transparent, high index of refraction oxide layers composed of laminated layers of Nb₂O₅ transparent, high index of refraction oxide layer along with Nb₂O₅ film with superior transparency and ITO film, which is conductive, composed of In₂O₃ and/or SnO₂.

Inventions of Claim 4 and Claim 5 are characterized in that, in the anti-reflection film of Claim 1, at least one of the other transparent, high index of refraction oxide layers includes at least one type of metallic oxide material selected from In₂O₃ and SnO₂ as a main component, as well as an oxide film that contains at least one type of oxide component of an element selected from a group of Si, Mg, Al, Zn, Ti, and Nb having equivalent concentration levels of greater than or equal to 5 mol%, and less than or equal to 40 mol%, or more preferably, of greater than or equal to 10 mol% and less than or equal to 30 mol%, in the form of SiO₂, MgO, Al₂O₃, ZnO, TiO₂, and Nb₂O₅.

In the inventions of Claim 4 and Claim 5, a colorless, highly transparent anti-reflection film having an antistatic effect can be obtained by making the film conductive without affecting transparency by using transparent, high index of refraction oxide layers consisting of Nb₂O₅ along with transparent, high index of refraction oxide layers composed of oxide materials having the compositions described above by adding an oxide material composed of at least one of the elements selected from a group of Si, Mg, Al, Zn, Ti, and Nb, in order to address the issue of reduced optical transparency at around 400 nm in the ITO film.

The invention of Claim 6 is characterized in that, in the anti-reflection film of Claim 1, at least one of the high index of refraction oxide layers, except for the Nb₂O₅ layer, comprises a layer selected from those composed of Ta₂O₅, TiO₂, ZrO₂, ThO₂, Si₃N₄, or Y₂O₃.

In the invention of Claim 6, at least one of the high index of refraction layers is formed with Nb₂O₅, and at least one of the other high index of refraction layers includes a layer of Ta₂O₅, TiO₂, CrO₂, ThO₂, Si₃N₄, or Y₂O₃. Accordingly, by arranging that thick high index of refraction layers are Nb₂O₅ layers formed by reactive sputtering, which makes high speed deposition possible, and thin high index of refraction layers are layers made of materials other than Nb₂O₅, there would be a higher degree of freedom in terms of the choice of target material for sputtering, despite a slight disadvantage in terms of deposition rates.

An invention of Claim 7 is characterized in that, in a plastic substrate with an anti-reflection layer which comprises an anti-reflection layer having laminated layers of transparent, high index of refraction oxide layers and transparent, low index of refraction oxide layers on top of each other on a plastic substrate or a plastic substrate with a hard-coat layer on the surface, at least one of the transparent, high index of refraction oxide layers is composed of an Nb₂O₅ layer formed by a reactive sputtering method.

In the invention of Claim 7, the plastic substrate with an anti-reflection layer that provides similar effects as those formed on a film can be obtained by using the Nb₂O₅ layer deposited by a reactive sputtering method as the transparent, high index of refraction oxide layers, even in a case where a plastic plate or a plastic plate with a hard-coat layer on top is used as an organic substrate.

The invention of Claim 8 is characterized in that the invention is an anti-reflection film formed with an anti-reflection layer comprising laminated layers of transparent, high index of refraction oxide layers and transparent, low index of refraction oxide layers on top of each other on a substrate made of an organic material, on which an inorganic barrier layer, having an index of refraction similar to the organic material, is formed in contact with at least one of the substrate surfaces.

In the invention of Claim 8, resistance to moisture and gas can be achieved by forming an inorganic barrier layer on an anti-reflection film using a substrate that comprises an inorganic material in order to eliminate a need to use a glass substrate. As a result, a display using such a film can achieve a thinner form factor and lighter weight.

The inventions of Claim 9 through Claim 11 define positions for forming the inorganic barrier layer and structures of the substrate. By defining these, it is possible to ensure resistance to humidity and gases. Furthermore, the definition of the structure of the substrate applies to the anti-reflection film of the invention of Claim 8, and this definition makes it possible to embody an anti-reflection film that is thinner and lighter.

The invention of Claim 12 is characterized in that, in the invention of Claim 8, the inorganic moisture barrier layer includes at least one selected from a group of SiO₂, SiOₓ, SiOₓN_{y}, Si₃N₄, SiₓN_{y}, Al₂O₃, AlₓO_{y}, and AlOₓN_{y}, (where x and y are arbitrary integers) as a main component. Furthermore, the invention of Claim 13 is characterized in that, in the invention of Claim 8, the index of refraction of the inorganic moisture barrier layer is between 1.4 and 2.1.

In the invention of Claim 12, the material that makes up the inorganic moisture barrier layer is defined. Specifically, by choosing from among these materials a material having an index of refraction similar to the substrate organic material, as described in the invention of Claim 13, it would be possible to prevent the optical characteristics of the inorganic moisture barrier layer from adversely affecting the anti-reflection properties and to maintain favorable anti-reflection characteristics possessed by the anti-reflection layer.

The invention of Claim 14 is characterized in that, in the invention of Claim 8, at least one of the transparent, high index of refraction oxide layers of the anti-reflection layer is composed of an Nb₂O₅ layer formed by a reactive sputtering method.

In the invention of Claim 14, a colorless, highly transparent anti-reflection film, having small deviations of less than or equal to 10% in spectral transmittance, as well as a high degree of transparency, with the visible-light wavelengths ranging from 400 nm to 650 nm, can be obtained, similar to a film using TiO₂, by forming Nb₂O₅ layers by a reactive sputtering method using an Nb target for the transparent, high index of refraction oxide layers, and a deposition rate for the Nb₂O₅ film that is two to three times higher than the TiO₂ film can be achieved in order to obtain an anti-reflection film that is less costly and offers a higher productivity than a film using the TiO₂ film, in addition to the advantage of forming an inorganic moisture barrier layer.

The invention of Claim 15 is characterized in that, in a plastic substrate with an anti-reflection layer, in which the anti-reflection layer is composed of laminated layers of transparent, high index of refraction oxide layers and transparent, low index of refraction oxide layers on top of each other on a plastic substrate or on a plastic substrate with a hard-coat layer on a surface, an inorganic moisture barrier layer, having an index of refraction similar to the plastic substrate, is formed in contact with at least one of the surfaces of the plastic substrate.

In the invention of Claim 15, a plastic substrate with an anti-reflection layer having effects similar to the invention of Claim 8 can be provided by forming an inorganic moisture barrier layer, when a plastic plate or a plastic plate with a hard-coat layer on top is used as the organic substrate.

The invention of Claim 16 is characterized in that, in the invention of Claim 15, at least one of the transparent, high index of refraction oxide layers is composed of an Nb₂O₅ layer formed by a reactive sputtering method in the anti-reflection layer.

In the invention of Claim 16, a colorless, highly transparent anti-reflection film, having small deviations of less than or equal to 10% in spectral transmittance, as well as a high degree of transparency, with the visible-light wavelengths ranging from 400 nm to 650 nm, can be obtained, similar to a film using TiO₂, by forming Nb₂O₅ layers by a reactive sputtering method using an Nb target for the transparent, high index of refraction oxide layers, and a deposition rate for the Nb₂O₅ film that is two to three times higher than the TiO₂ film can be achieved in order to obtain an anti-reflection film that is less costly and offers a higher productivity than a film using the TiO₂ film, in addition to the advantage of forming an inorganic moisture barrier layer.

### Brief Description of the Drawings

Fig. 1 is a cross-sectional diagram showing an example of a laminated layer structure of the anti-reflection film of the present invention.
Fig. 2 is a diagram showing an outline of a sputtering apparatus for continuously depositing the various oxide layers of the anti-reflection film.
Fig. 3 is a diagram showing an outline of an adhesion strength testing system for evaluating the adhesion strength of the anti-reflection film to the base.
Fig. 4 is a top view showing the shape of a head part in Fig. 3.
Fig. 5 is a diagram showing spectral transmittance characteristics of various oxide films.
Fig. 6 is a diagram showing spectral transmittance characteristics of various oxide films.
Fig. 7 is a diagram showing spectral transmittance characteristics of various oxide films.
Fig. 8 is a diagrammatic perspective view showing an example of a structure of the organic EL display.
Fig. 9 is a diagrammatic cross-sectional view showing an example of the structure of the organic EL display.
Fig. 10 is a cross-sectional diagram showing a sealed status accomplished by a glass substrate, pasted with an AR film, in a surface light emitting organic EL display.
Fig. 11 is a cross-sectional view showing a sealed status accomplished by AR film with an inorganic moisture barrier layer in a surface light emitting organic EL display.
Fig. 12 is a cross-sectional view of an example of a structure of the AR film with an inorganic moisture barrier layer.
Fig. 13 shows manufacturing steps for the organic EL display using an organic base substrate and shows from an angle the steps for forming the transparent electrodes.
Fig. 14 is a view from an angle of the steps for forming the organic light-emitting device patterns.
Fig. 15 is a view from an angle of the steps for forming the electrode layer with a light reflecting material.
Fig. 16 is a cross-sectional view showing the sealed status accomplished by the sealing film.
Fig. 17 is a diagram that compares the spectral transmittance characteristics of a first embodiment and the conventional art.
Fig. 18 is a diagram that compares the spectral reflectance characteristics of the first embodiment and the conventional art.
Fig. 19 is a diagram that compares the spectral transmittance characteristics of a third embodiment with the conventional art.
Fig. 20 is a diagram that compares the spectral reflectance characteristics of the third embodiment with the conventional art.
Fig. 21 is a diagrammatic perspective view of a stainless steel container used for evaluating moisture permeability.
Fig. 22 is a diagrammatic cross-sectional view showing the sealed status accomplished by the AR film in the stainless container.
Fig. 23 shows evaluation results for moisture permeability.
Fig. 24 is a schematic view of an example of a film deposition system for an ionized, two-element, vapor deposition method.

### Best Mode for Carrying Out the Invention

The anti-reflection film and the plastic substrate with an anti-reflection layer, based on the present invention, will be described in detail next by referring to the drawings.

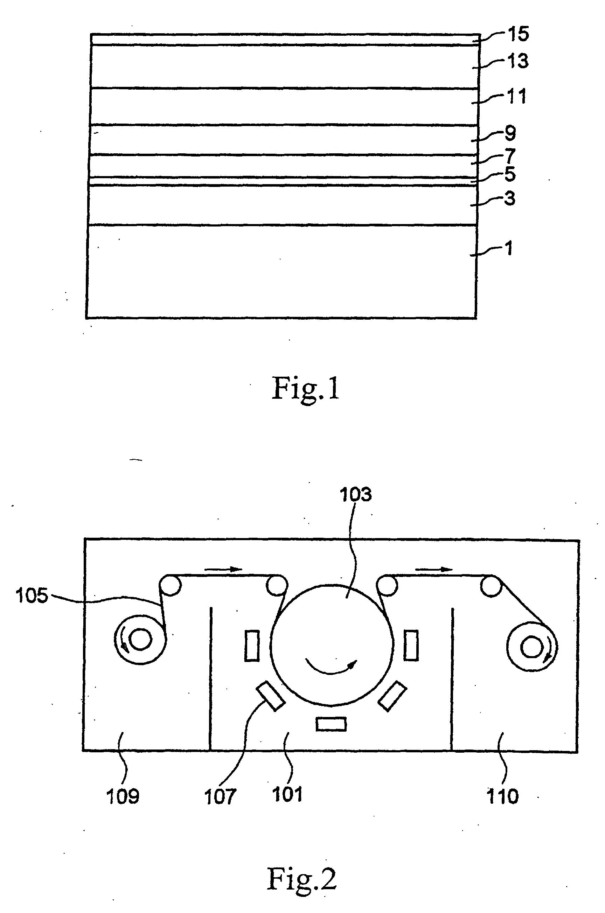

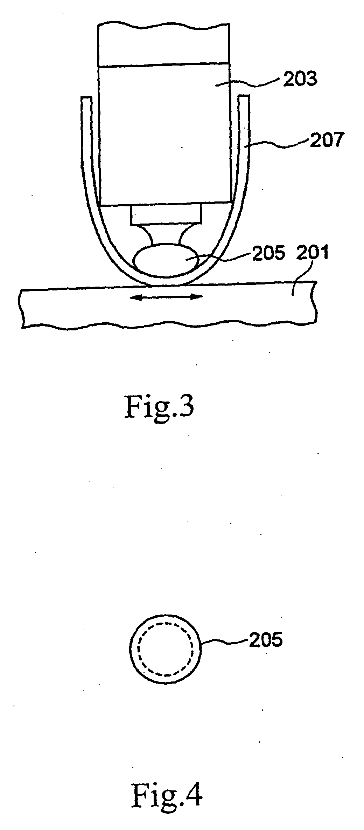

Fig. 1 shows a cross-section of a laminated layer structure of the AR film of the present invention, and Fig. 2 shows an outline of a sputtering apparatus for continuously depositing the various oxide layers of the AR film. Fig. 3 is a diagram showing an outline of an adhesion strength testing system for evaluating adhesion strength of the oxide layers in the AR film. Fig. 4 shows a top view of the shape of a head part, where a load is applied, in Fig. 3.

In Fig. 1, the AR film includes a base 1, a hard-coat layer 3 formed on the base 1, a first sputtered layer 5 formed on the hard-coat layer 3, a first transparent, high index of refraction oxide layer 7 formed on the first sputtered layer 5, a first transparent, low index of refraction oxide layer 9 formed on top of the first transparent, high index of refraction oxide layer 7, a second transparent, high index of refraction oxide layer 11 formed on top of the first transparent, low index of refraction oxide layer 9, a second transparent, low index of refraction oxide layer 13 formed on top of the second transparent, high index of refraction oxide layer 11, and an anti-contamination layer 15 formed on the surface of the second transparent, low index of refraction oxide layer 13 for preventing contamination.

A basic structure of the anti-reflection film is as described above. Next, an example of the film composition will be described next. In a first example, Nb₂O₅ films, formed by a reactive sputtering method, are used for the first transparent, high index of refraction oxide layer 7 and the second transparent, high index of refraction oxide layer 11. An oxide film composed of at least one type of material selected from a group of ZrOₓ (where x = 1-2), TiOₓ (where x = 1-2), SiOₓ (where x = 1-2), SiOₓN_{y} (where x = 1-2 and y = 0.2-0.6) and CrOₓ (where x = 0.2-1.5) is used for the first sputtered layer 5. SiO₂ films, formed by the reactive sputtering method, are used for the first and second transparent, low index of refraction oxide layers 9 and 13.

The various sputtered layers, which include the first sputtered layer 5 through the second transparent, low index of refraction oxide layer 13, are deposited on top of the base 1, on which the hard-coat layer 3 has been formed, by, for example, a sputtering system as shown in Fig. 2. An organic polymer material, such as PET, TAC (triacetyl cellulose), and polycarbonate, is used for the base 1. The material for the hard-coat layer 3, formed on the base 1, may be a silicon material, a multifunctional acrylate material, an urethane resin material, a melamine resin material, or an epoxy resin material. However, an acrylate which is curable under UV curing processing, such as polymethylmethacrylate (PMMA), is preferred in terms of overall performance, including pencil hardness, transparency, and resistance to cracks.

The sputtering system shown in Fig. 2 includes a roll out chamber 109 for rolling out a roll-shaped film 105, on which the hard-coat layer has already been formed, a sputter chamber 101 for sputtering on the film 105, and a roll up chamber 110 for rolling up the film 105, all of which are set up continuously. A main roller 103, which picks up the film 105 and rolls in the direction of the arrow, is set up in the sputter chamber 101, and a plurality of cathodes 107, on which targets are loaded, are set up at prescribed intervals around the main roller 103. In this structure, an oxygen gas atmosphere is created on the surface of each of the cathodes 107, a voltage is applied on the cathodes 107, and sputtered films, corresponding to the targets loaded on the cathodes 107, are deposited one after another on the film 105.

With such a sputtering system, the first sputtered layer 5, composed of at least one material selected from a group of ZrOₓ (where x = 1-2), TiOₓ (where x = 1-2), SiOₓ (where x = 1-2), SiOₓN_{y} (where x = 1-2 and y = 0.2-0.6) and CrOₓ (where x = 0.2-1.5), on top of the hard-coat layer 3 on the base 1, is first formed. Because the first sputtered layer 5 is formed with these metallic suboxide materials, a strong adhesion to the hard-coat layer can be obtained. For example, refractory metals with strong bonds to oxygen, such as Zr, Ti, Si, and Cr, are used for the target materials, and sputtering deposition is performed in an Ar atmosphere with 50 volume percent oxygen, so that these metals would get partially oxidized to form metallic suboxides, as described above, and bond with oxygen, that makes up the organic molecules in the hard-coat material, to form a strong adhesion layer with respect to the hard-coat. On the other hand, when sputtering deposition is performed using the SiO₂, ZrO₂, TiO₂, or Cr₂O₃ oxide material target, adhesion strength to the hard-coat would be weak.

Fig. 3 shows the adhesion strength test system used for examining the adhesion strength to the hard-coat. A head 205 with a load 203, weighing 2 kg, is pressed on to a film 201, which is formed with the first sputtered layer 5, the first transparent, high index of refraction oxide layer 7, the first transparent, low index of refraction oxide layer 9, the second transparent, high index of refraction oxide layer 11, the second transparent, low index of refraction oxide layer 13, and the anti-contamination layer 15, through, for example, four layers of gauze material 207, which has been immersed in ethyl alcohol, and is pushed back and forth along the direction of the arrow across a distance of 10 cm, in order to evaluate the adhesion strength of the sputtered film in the film 201. The head 205 has an elliptical shaped cross section (23.3 mm long major axis and 10 mm long minor axis), and is, as shown in Fig. 4, circular shaped, with a diameter of 23.3 mm, when viewed from top. The actual contact surface (shown with a dotted line in the figure) has a diameter of approximately 17 mm and a contact surface area of approximately 2.3 cm². Using this adhesion strength test system, the number of times the head 205 travels back and forth is counted until the film 201 begins to strip off. When the first sputtered layer 5 has been formed with a metallic suboxide using the Zr, Ti, Si, or Cr metallic target, no damages are observed after the head travels back and forth more than 30 to 50 times. When the first sputtered layer 5 has been formed using the SiO₂, ZrO₂, TiO₂, or Cr₂O₃ oxide target, the film begins to strip off when the head traveled back and forth less than or equal to 5 times. By the way, among a choice of Zr, Ti, Si, and Cr, Si would be the material easiest to use, because it is also used for the SiO₂ low index of refraction oxide layers.

An Nb₂O₅ film is deposited as the first transparent, high index of refraction oxide layer 7 on top of the first sputtered layer 5, and an SiO₂ layer is deposited next as the first transparent, low index of refraction oxide layer 9. Then an Nb₂O₅ film and an SiO₂ film are deposited again as the second transparent, high index of refraction oxide layer 11 and the second transparent, low index of refraction oxide layer 13. Finally, the anti-contamination layer 15 for preventing contamination on the surface is coated on the surface to complete the manufacturing of the AR film. The Nb₂O₅ film and the SiO₂ film are deposited using the reactive sputtering method by, for example, sputtering Nb and Si metallic targets in an Ar atmosphere that contains 50 volume percent oxygen.

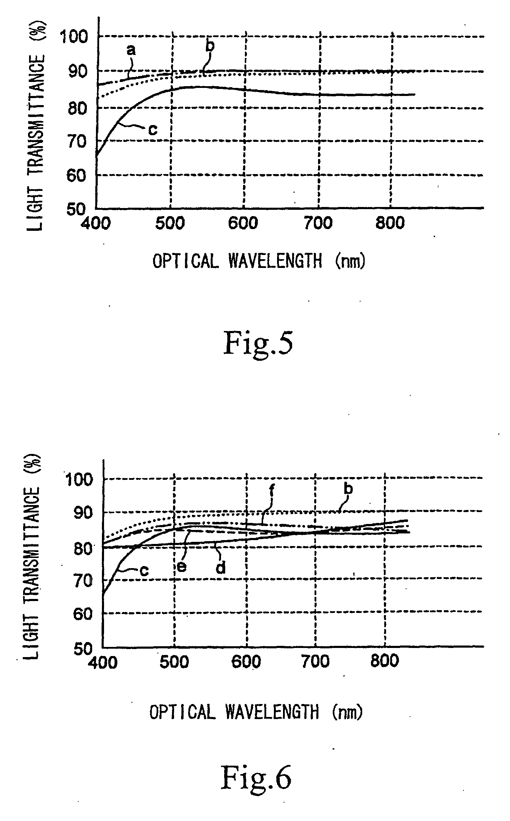

A curve "a" in Fig. 5 shows the spectral transmittance characteristics of a 60 nm thick Nb₂O₅ film. For a sake of comparison, a curve "b" shows the spectral transmittance characteristics of a TiO₂ film of the same thickness, while a curve "c" shows the spectral transmittance characteristics of an ITO film (83 mol% In₂O₃ - 17 mol% SnO₂) of the same film thickness. The Nb₂O₅ film and the TiO₂ film are deposited using Nb or Ti metallic targets, while the ITO film is deposited using an oxide target having a composition of 83 mol% In₂O₃ - 17 mol% SnO₂. Sputtering conditions for each film are as follows:
Sputtering conditions when using the Nb or Ti target
   Atmospheric gas: Ar - 50 volume percent O₂
   Power density: 6 W/cm²
   Substrate: PET base with hard-coat
Sputtering conditions when using the ITO target
   Atmospheric gas: Ar - 10 volume percent O₂
   Power density: 3.6 W/cm²
   Substrate: PET base with hard-coat

As evident in Fig. 5, the Nb₂O₅ film has the highest spectral transmittance at the short wavelength of 400 nm and, like the TiO₂ film, offers high transparency across a wide range of wavelengths. At the same time, the Nb₂O₅ film can be deposited at a deposition rate two to three times higher than the TiO₂ film. By using the Nb₂O₅ film as a replacement for the TiO₂ film in at least one of the transparent, high index of refraction oxide layers, a highly transparent, colorless AR film can be manufactured at low cost.

As clearly explained above, in the film structure of the first example, a metallic suboxide film is used as the first sputtered layer to be deposited on the hard-coat layer, and the Nb₂O₅ film is used in lieu of the TiO₂ film for at least one of the transparent, high index of refraction layer in order to obtain a colorless, highly transparent AR film having a superior adhesion to the base at low cost.

Next, the film structure of the second example will be described. By the way, parts that are common to the first example will not be described so as to avoid an overlap. In contrast to the first example, in the present example, a thin ITO film is laminated on the Nb₂O₅ film for the first transparent, high index of refraction oxide layer 7 or the second transparent, high index of refraction oxide layer 11 in order to achieve an optimal resistivity while ensuring colorlessness and high transparency across a wide range of wavelengths.

Although the ITO film has a disadvantage of a low transmittance at short wavelengths and can acquire a yellowish tint, the film thickness only needs to be approximately 5 nm for achieving a conductance of approximately 1 × 10⁴ ohm per square. When a thin ITO film, of approximately 5 nm in thickness, is laminated on the Nb₂O₅ film, the effects of the ITO film would remain insignificant, and the spectral transmittance would remain constant across the visible wavelengths.

Therefore, in the present example, the thin ITO film is laminated on the Nb₂O₅ film for the transparent, high index of refraction oxide layer, in order to obtain low cost, highly reliable, colorless, highly transparent AR film with an antistatic effect, suitable for the LCD and organic EL display applications.

The third example of film structure will be described next. In the third example, the film is colorless, highly transparent, and conductive, as in the second example. Compared with the first example, the Nb₂O₅ film is used for one (for example, the second transparent, high index of refraction oxide layer 11) of the first transparent, high index of refraction oxide layer 7 or the second transparent, high index of refraction oxide layer 11, and an oxide film, having In₂O₃ or ITO as the main component and containing oxide or oxides of one or more elements selected from a group of Si, Mg, Al, Zn, Ti, or Nb having equivalent concentration level of 5-40 mol% or, more preferably, 10-30 mol%, in the form of SiO₂, MgO, Al₂O₃, ZnO, TiO₂, or Nb₂O₅ is used for the other layer (for example, the first transparent, high index of refraction oxide layer 7).

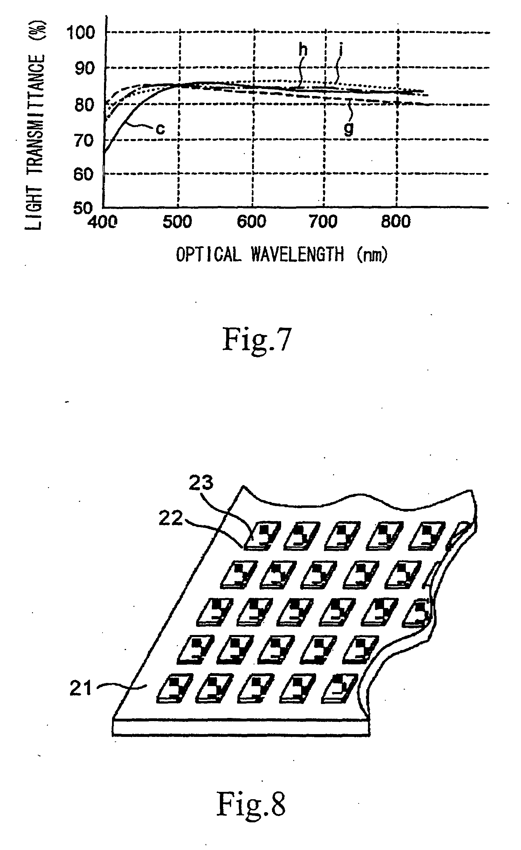

Curves "d" through "i" in Fig. 6 and Fig. 7 show the spectral transmittance characteristics of 60-nm thick oxide films, having the compositions described above, similarly to Fig. 5. The composition of each oxide film is as follows:
d: 73 mol% In₂O₃ - 27 mol% ZnO
e: 78 mol% In₂O₃ - 12 mol% SnO₂ - 5 mol% ZnO - 5 mol% SiO₂
f: 70 mol% In₂O₃ - 10 mol% SnO₂ - 20 mol% Nb₂O₅
g: 78 mol% In₂O₃ - 12 mol% SnO₂ - 10 mol% MgO
h: 80 mol% In₂O₃ - 12 mol% SnO₂ - 8 mol% Al₂O₃
i: 74 mol% In₂O₃ - 12 mol% SnO₂ - 7 mol% MgO - 6 mol% TiO₂

These oxide films are deposited using oxide targets of corresponding compositions, and sputtering conditions are as follows:
Atmosphere gas: Ar - 10 volume% O₂
Power density: 3.6 W/cm²
Substrate: PET base with hard-coat

As evident in Fig. 6 and Fig. 7, transmittance at a short wavelength of 400 nm is approximately 10% or more in oxide films with ZnO, SiO₂, MgO, Al₂O₃, TiO₂, and Nb₂O₅ added to In₂O₃ or ITO, compared with ITO. SiO₂, MgO, Al₂O₃, ZnO, TiO₂, and Nb₂O₅ used as additive components in the oxide films offer high optical transmittance by themselves at shorter wavelengths, tend to vitrify easily when mixed and melted with In₂O₃ and SnO₂, and tend to easily form glass-structured networks. (For example, SiO₂ is a famous example of an oxide material that forms a glass mesh structure through bonds between Si atoms). When added to In₂O₃ or ITO, they offer higher transmittance at short wavelengths compared with In₂O₃ or ITO by itself. Therefore, these oxide films are able to eliminate the yellowish tint in the ITO film while achieving deposition rates comparable to the ITO film. For this effect, the total oxide content in the oxide film should preferably be greater than or equal to 5 mol% and less than or equal to 40 mol% in the form of SiO₂, MgO, Al₂O₃, ZnO, TiO₂, and Nb₂O₅ with the In₂O₃ or ITO as the base material. At less than or equal to 5 mol%, the improvements in transmittance at shorter wavelengths would be minimal, while at greater than or equal to 40 mol%, the relative contents of In₂O₃ and SnO₂ would become too small, making it no longer possible to achieve the advantage of high sputter deposition rates. Furthermore, in terms of sputtering deposition rates and transmittance characteristics at shorter wavelengths, concentration levels of greater than or equal to 10 mol% and less than or equal to 30 mol% would be even more preferable.

With the oxide composition of, for example, 73 mol% In₂O₃ - 27 mol% ZnO, a film having a resistivity of approximately 300 to 500 µΩ•cm, which would be comparable ITO, could be formed, thereby making the AR film conductive. In other words, by adjusting the type of additives, which include ZnO, SiO₂, MgO, Al₂O₃, TiO₂, Nb₂O, and their amounts, the resistivity of the oxide film can be selected to achieve the conductivity required for an antistatic effect.

When depositing these oxide films, the oxide targets can be used, or the metallic targets can be used. When using the oxide targets, the appropriate oxide materials are combined, mold pressed, and sintered in an atmosphere with appropriate oxygen concentration according to the target sputtered-film composition. For the metallic targets, alloys having the metallic composition corresponding to the target sputtered-film composition would be used. When using the metallic targets, a gas having a flow ratio of 50% oxygen and 50% Ar should preferably be used during sputtering. When using the oxide targets, the amount of oxygen is preferably to be set less than or equal to 30%, or more specifically, approximately 10%.

Furthermore, trace amounts of transparent oxide materials, such as Sb₂O₃, B₂O₃, Y₂O₃, CeO₂, ZrO₂, ThO₂, Ta₂O₅, Bi₂O₃, La₂O₃, or Nd₂O₃ may be added to SiO₂, MgO, Al₂O₃, ZnO, TiO₂, or Nb₂O₅.

As evident in the description above, in the examples of various film structures described above, oxide films with ZnO, SiO₂, MgO, Al₂O₃, TiO₂, and Nb₂O₅ added to In₂O₃ or ITO are used for some of the transparent, high index of refraction oxide layers, while the Nb₂O₅ film is used for other parts, in order to obtain low cost, high reliability, colorless, and highly transparent AR film having an antistatic effect.

Although film structures formed on the PET base with the hard-coat layer were described in the first through third examples described above, the various layers, of course, may also be formed on a TAC (triacetyle cellulose) base or a TAC base with a hard-coat layer for further enhancing the transmittance or in consideration of polarization, or be formed on a film, such as polycarbonate, a glass, or acrylic plate. Furthermore, while the AR film described above is suitable for pasting on a surface that requires anti-reflection by coating an adhesion on the backside of the base, various other applications are possible, including the AR oxide layers formed on the back and front sides of a transparent acrylic plate.

Furthermore, in the first example through the third example, trace amounts of materials, such as In₂O₃, SnO₂, and ZnO, which enhance the sputter rates compared with Nb₂O₅, may be added to the Nb₂O₅ films, which are formed as the high index of refraction oxide layers, with appropriate sputtering conditions.

Furthermore, in the first example through the third example, at least one of the high index of refraction oxide layers is formed with Nb₂O₅, while other high index of refraction layers may include a layer chosen from a selection of Ta₂O₅, TiO₂, ZrO₂, ThO₂, Si₃N₄, or Y₂O₃.

The inorganic moisture barrier layer, the second characteristic of the present invention, will be described next. For example, moisture and gas can adversely affect the performance of an inorganic EL device. In such a display, the inorganic moisture barrier layer of the present invention works effectively.

An inorganic EL display, as shown in Fig. 8, is made of a TFT glass device substrate 21, on which organic light emitting layer patterns 22 and transparent electrode patterns 23 are formed corresponding to the pixels. An image is displayed by selectively driving the organic light emitting layer patterns 22 for light emission.

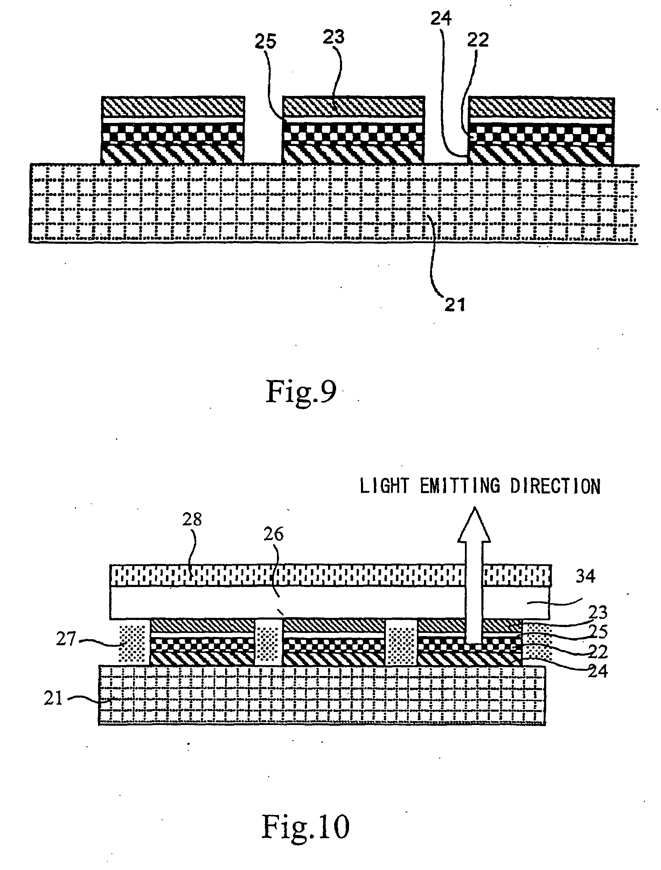

Fig. 9 shows a cross-section of the structure of the organic EL display. This organic EL display emits light from the top surface. In addition to the organic light emitting layer patterns 22 and the transparent electrode patterns 23, a light reflecting material electrode layer 24 and a semitransparent reflecting layer 25 are formed on the TFT glass device substrate 21.

The organic light emitting layer patterns 22 include a hole transport layer, a charge transport layer, a light emitting layer, a buffer layer and so on, which are laminated on top of each other in a prescribed order and patterned for each pixel.

In the organic light emitting layer patterns 22, the hole transport layer plays a role of transporting holes injected from anode lines to the light emitting layer. Any existing and known materials may be used for the hole transport layer, including benzin; styrylamine; triphenylamine; porphyrin; triazol; imidazol; oxadiazol; polyaryl-alkane (?); phenylene diamine; arylamine; oxazole; anthracene; fluorenone; hydrazone; or stylbene; their derivatives; as well as heterocyclic-conjugated monomer, polymer or olygomer, like polysilane compounds; vinyl carbazole compounds; thiophene compounds; and anylene compounds. Specific examples of such compounds would be, but not limited to, α-naphtyl phenyl diamine; porphyrin; metallic tetraphenyl porphyrin; metallic naphthalocyanine; 4, 4, 4-tris (3-methyl phenyl phenyl amino) triphenyl amine; N, N, N, N-tetrakis (p-tryl) p-phenylene diamine; N, N, N, N-tetraphenyl 4, 4-diamino biphenyl; N-phenyl carbazole; 4-di-p-tryl amino stilbene; poly (paraphenylene vinylene); poly (thiophene vinylene); and poly (2, 2-thionyl pyrrole).

Any material may be used for the light emitting layer, as long as it is able to inject holes from the cathode side and electrons from the anode side, keep the holes and the electrons mobile, and provide an area in which the holes and the electrons can get recombined under a voltage bias and offer a high light-emitting efficiency. For example, it may be a low-molecular weight fluorescent pigment, fluorescent polymers, metallic complex, and other organic materials. More specifically, such a material may include anthracene; naphthalene; phenanthrene; pirenne; crycene; perylene; butadiene; coumarin; acridine; stilbene; tris (8-quinolinolato) aluminum complex; bis (benzo quinolinolato) beryllium complex; tri (dibenzoyl methyl) phenanthroline europium complex; ditoluic vinylbiphenyl; and α-naphtyl phenyl diamine.

The charge transport layer transports electrons injected from the cathode line to the light emitting layer. Charge transporting materials, that may be used for the charge transport layer, include quinoline; perylene; bis-styryl; pyrazine; and their derivatives. Specific compounds would be 8-hydroxy quinoline aluminum; anthracene; naphthalene; phenanthrene; pirenne; crycene; perylene; butadiene; coumarin; acridine; stilbene; (8-quinolinolato) aluminum complex; and their derivatives.

In the surface-light-emitting organic EL display, as shown in Fig. 10, the light reflecting material electrode layer 24, the organic light emitting layer patterns 22 (buffer layer + hole transport layer + organic light emitting layer are included), the semitransparent reflecting layer 25, and the transparent electrode patterns 23 are normally formed in this order on the TFT glass device substrate 21, and a glass substrate 26, which becomes the front surface panel, is bonded using, for example, a UV curable adhesion resin layer 27 to seal the organic EL device part. Then, an anti-reflection film 28 is pasted on the glass substrate 26 through an adhesion layer 34 to complete an organic EL display that offers superior color display.

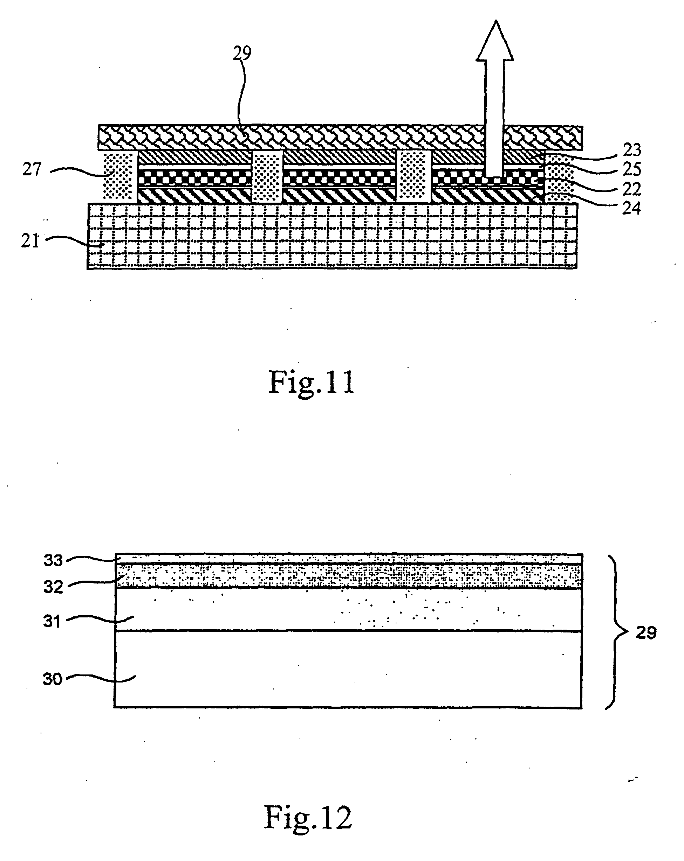

When the above described glass substrate 26 is used, however, it is difficult to make the display thin or light. Therefore, in the present invention, as shown in Fig. 11, an anti-reflection film 29, having an inorganic moisture barrier layer, is pasted, without using the glass substrate 26, through, for example, a UV curable adhesion resin layer 27.

In this application, the anti-reflection film 29 requires the inorganic moisture barrier layer, an example of the structure of which is shown in Fig. 12. In the anti-reflection film 29, an inorganic moisture barrier layer 31, an anti-reflection layer 32, and an anti-contamination layer 33 are laminated on top of each other on an organic base substrate 30 made of polyethylene terephthalate (PET) and triacetyl cellulose (TAC). Of course, the inorganic moisture barrier layer 31 may be formed on a side opposite from the side on which the anti-reflection layer 32 is formed on the organic base substrate 30.

The inorganic material that makes up the inorganic moisture barrier layer 31 must offer resistance to moisture and gasses and should preferably possess an index of refraction that is close to the organic base substrate, in consideration of the optical characteristics. Therefore, the inorganic moisture barrier layer 31 may consist of materials such as SiO₂, SiOₓ, SiOₓN_{y}, Si₃N₄, SiₓN_{y}, Al₂O₃, AlₓO_{y}, AlOₓN_{y} (where x and y are arbitrary integers). The inorganic moisture barrier layer 31 may be formed using one or two of these materials as main components.

Furthermore, as far as the index of refraction is concerned, the index of refraction of the inorganic moisture barrier layer 31 should preferably be also in the range of 1.4 to 2.5, because the organic base substrate has the index of refraction of 1.4 to 1.5. When the index of refraction of the inorganic moisture barrier layer 31 exceeds this range, reflections at the interface becomes an issue. The index of refraction of the inorganic moisture barrier layer 31 is preferably as small as possible within this range. For this reason, SiO₂ and Al₂O₃ would be suitable.

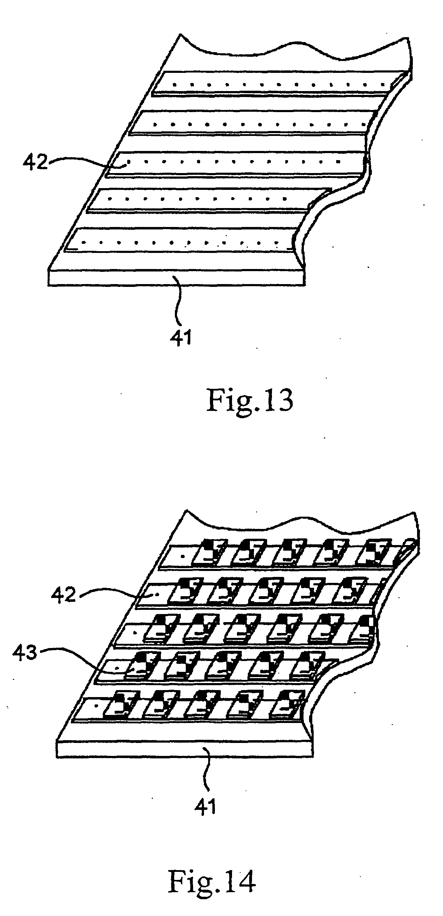

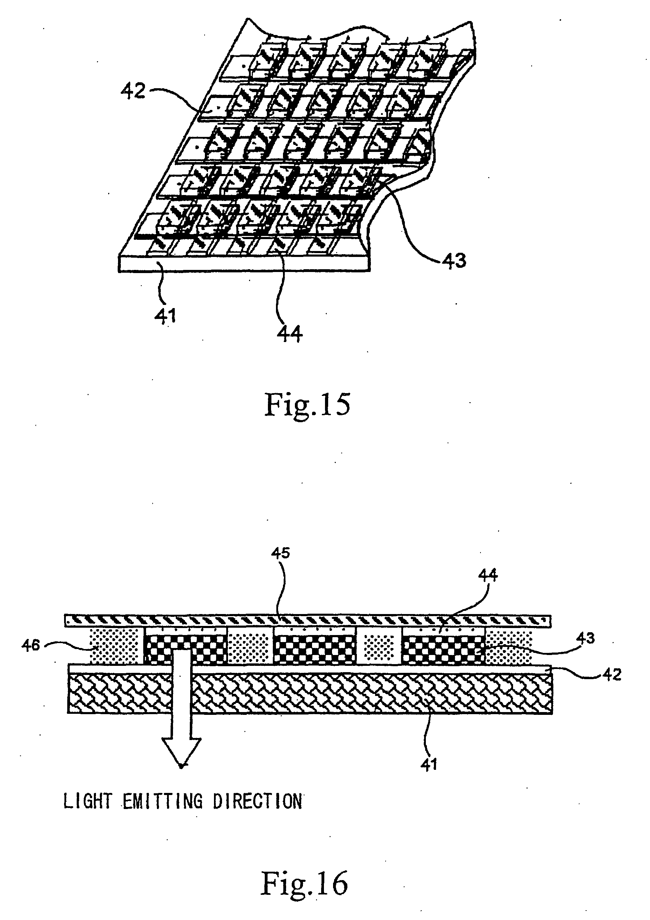

The anti-reflection film that also offers the anti-reflection property and moisture barrier property are useful for organic EL displays other than those that emit light from the top surface. For example, in an organic EL display that emits light from the lower surface, as shown in Fig. 13, stripe-shaped transparent electrodes 42 are formed on an organic base substrate 41, and, as shown in Fig. 14, organic light emitting layer patterns 43 are formed with a prescribed spacing on top thereof. Furthermore, as shown in Fig. 15, a light reflecting material electrode layer 44 is formed orthogonally to the transparent electrodes 42 and to overlap with the organic light emitting layer patterns 43. Then, as shown in Fig. 16, a side opposite from the organic base substrate 41 is covered with a sealing film 45, and at the same time, bonded with a UV curable resin 46 (refer to Monthly Display, July 2001, Vol. 7, No. 7, 11-15).

In this structure, the anti-reflection film, that combines the anti-reflection layer and the inorganic moisture barrier layer, is used as the organic base substrate 41, in lieu of a simple organic base substrate, in order to provide a display with a superior color fidelity that would be easy to see, because the anti-reflection layer found on the surface eliminates the effects of colors in the reflected light.

The anti-reflection film (AR film) with the inorganic moisture barrier layer (described above) resists moisture and gases and offers superior optical characteristics, while the inorganic moisture barrier layer, which is several times thicker than the anti-reflection layer, between the anti-reflection layer and the hard-coat layer made of an organic resin, provides a high degree of pencil hardness (4H-5H) on the surface and protects the display from damages.

### (Embodiment Examples)

Specific embodiment examples based on the present invention will be described next.

### First Example of the Embodiment

An AR film, having the structure described below, has been manufactured as a first example of the embodiment of the anti-reflection film of the present invention.
PET base 188 µm /
hard-coat layer 6 µm /
SiOₓ layer 4 nm /
Nb₂O₅ layer 15 nm /
SiO₂ layer 28 nm /
Nb₂O₅ layer 112 nm /
SiO₂ layer 85 nm /
anti-contamination layer 5 nm

In this structure, the sputtering of the Nb₂O₅ layer is performed by applying a 40 KHz alternating current between two Nb targets on dual magnetron cathodes, with the Ar: oxygen gas volume ratio at 1 : 1, gas pressure at 0.1 Pa. Under these sputtering conditions, a deposition rate that is 2.2 times the deposition rate of a TiO₂ layer has been achieved.

Furthermore, the SiOₓ layer is deposited by sputtering, as the Ar : oxygen gas volume ratio is maintained at 1 : 1 as the center value, in order to keep the reduction in transmittance to 0.5%-2.5%. According to an analysis, the x value in SiOₓ can be anywhere in a range between greater than or equal to 0.5 and less than 2.0 but should preferably be kept in a range between 1.0 and 1.8. When such an SiOₓ layer is not formed, peeling is observed in the adhesion strength test shown in Fig. 3, leading to a conclusion that the required adhesion strength would not be obtained.

Furthermore, the SiO₂ layer is deposited with dual magnetron cathodes with the sputtering condition in which the Ar : oxygen gas volume ratio is 1 : 1. Furthermore, in the present embodiment, the hard-coat layer is formed at a 6 µm thickness using a UV curable resin on a PET film base. Without the hard-coat, pencil hardness would be 1H, while a pencil hardness of 3H is achieved by forming the hard-coat.

In comparison to the present example of the embodiment, an AR film having the following structure has been manufactured as an example of a prior art:
PET base 188 µm /
hard-coat base 6 µm /
SiOₓ layer 4 nm /
ITO (83 mol% In₂O₃ - 17 mol% SnO₂ composition) layer 21 nm /
SiO₂ layer 32 nm /
ITO layer 60 nm /
SiO₂ layer 95 nm /
anti-contamination layer 5 nm

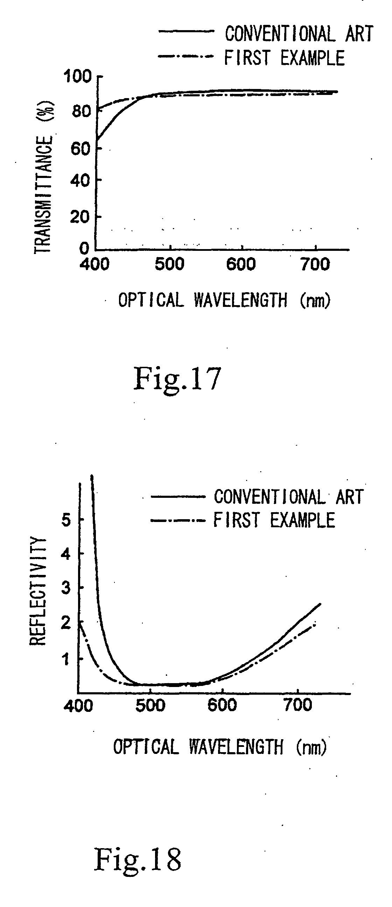

The spectral transmittance is shown in Fig. 17, and spectral reflectivity is shown in Fig. 18 for the first example of the embodiment and the example of the prior art. Fig. 17 and Fig. 18, by the way, show simplified curves that represent averages of the small fluctuations in the spectral transmittance and spectral light reflectance. Long dashed dotted lines represent the first example of the embodiment, while solid lines represent the example of the prior art. As evident in Fig. 17, the AR film of the first example of the embodiment shows an approximately 16% improvement in transmittance at an optical wavelength of 400 nm, compared with the example of the prior art. This is due to the differences in light absorption characteristics at various wavelengths between the ITO layer and the Nb₂O₅ layer. On the other hand, as evident in Fig. 18, the spectral reflectance of the first example of the embodiment across a wavelength range of 500-600 nm is almost similar to the example of the conventional art.

As mentioned earlier, in the present example of the embodiment, the hard-coat layer is formed on the PET base to ensure hardness against damages and to ensure durability, and the SiOₓ layer is formed in order to ensure an adequate adhesion strength of the AR sputtered film on the hard-coat layer, and the Nb₂O₅ film, which enables a deposition rate that is more than twice the deposition rate of a TiO₂ film, is formed as the high index of refraction oxide layer for a flat curve representing the optical transmittance for the visible-light wavelengths, in order to obtain a highly transparent, colorless AR film that offers superior productivity and reliability.

### Second Example of the Embodiment

An AR film, having a structure described below, has been manufactured as a second example of the embodiment for the anti-reflection film structure of the present invention.
PET base 188 µm /
hard-coat layer 6 µm /
SiOₓ layer 4 nm /
ITO layer 4 nm /
Nb₂O₅ layer 12 nm /
SiO₂ layer 28 nm /
Nb₂O₅ layer 112 nm /
SiO₂ layer 85 nm /
anti-contamination layer 5 nm

In the film structure above, the films are formed in a similar way as the first example of the embodiment, except for the ITO layer. The ITO layer is deposited using an ITO target in a gas atmosphere with the Ar : O₂ volume ratio of 9 : 1. As a result, transmittance at a wavelength of 400 nm is approximately 1% lower compared with the first example of the embodiment, but a conductance of 1 × 10⁴ ohm per square is achieved. The film is made conductive without adversely affecting the constancy in transmittance characteristics across the visible light wavelengths. As a result, a colorless, highly transparent, conductive AR film, that offers superior productivity and reliability, has been obtained.

By the way, the AR films can be deposited using the sputtering system shown in Fig. 2 for both the first example of the embodiment and the second example of the embodiment. With the second example of the embodiment, the first cathode among the five cathodes 107, shown in Fig. 2, may be replaced by two cathodes, having a smaller dimension along the direction in which the film rolls, in order to have a total of six cathodes 107, so that six layers of sputtered films can be deposited with a single pass for the film. Because the first-layer SiOₓ film and the second-layer ITO film are both very thin at only approximately 4 nm in thickness, film depositions are possible using the cathodes of smaller dimensions.

### Third Example of the Embodiment

An AR film having the following structure has been manufactured as the third example of the embodiment of a film structure of the anti-reflection film of the present invention.
PET base 188 µm /
hard-coat layer 6 µm /
SiOₓ layer 4 nm /
73 mol% In₂O₃ - 27 mol% ZnO composition layer 18 nm /
SiO₂ layer 28 nm /
Nb₂O₅ layer 112 nm /
SiO₂ layer 85 nm /
anti-contamination layer 5 nm

In the structure above, the layer having the 73 mol% In₂O₃ - 27 mol% ZnO composition is deposited using an oxide target in a gas atmosphere with an Ar : O₂ volume ratio of 9 : 1. Film deposition rate is almost similar to the ITO film. In other respects, the AR film is manufactured in the same way as the first example of the embodiment.

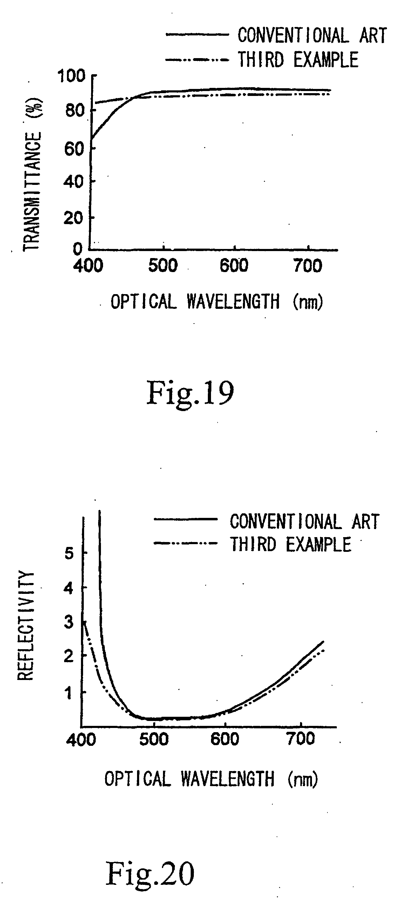

Spectral transmittance for the third example of the embodiment is shown in Fig. 19, while spectral reflectivity is shown in Fig. 20 with long dashed double dotted lines in both. In these figures, solid lines represent the example of the prior art in Fig. 19 and Fig. 20 for the sake of comparison. As evident in Fig. 19, the AR film of the third example of the embodiment, compared with the example of the prior art in which all high index of refraction oxide layers are formed with ITO, transmittance improves by approximately 15% at an optical wavelength of 400 nm, and the width of deviation in spectral transmittance across the wavelengths of 400-650 nm has been dramatically reduced to approximately 5%. On the other hand, as evident in Fig. 20, the spectral reflectance across a wavelength range of 500-600 nm for the third example of the embodiment is almost similar to the example of the conventional art. Furthermore, a conductance value of 920 ohm per square has been obtained.

As described above, a material having a high conductance, such as the 73 mol% In₂O₃ - 27 mol% ZnO, is used for the thin, high index of refraction oxide layer, while an Nb₂O₅ layer, which offers a higher transparency, is used for the thick, high index of refraction oxide layer, in order to obtain a conductive, highly transparent, highly reliable, and low cost AR film even with five layers of sputtered films.

### Fourth Example of the Embodiment

An AR film having the structure below has been manufactured as another example corresponding to the third example of the embodiment of the film structure for the anti-reflection film of the present invention.
PET base 75 µm /
hard-coat layer 6 µm /
SiOₓ layer 5 nm /
78 mol% In₂O₃ - 12 mol% SnO₂ - 10 mol% MgO composition layer 18 nm /
SiO₂ layer 20 nm /
Nb₂O₅ layer 83 nm /
SiO₂ layer 85 nm /
anti-contamination layer 5 nm /

An AR film having the following structure has been manufactured as an example of the prior art corresponding to the present example of the embodiment.
PET base 75 µm /
hard-coat layer 6 µm /
SiOₓ layer 5 nm /
ITO layer 15 nm /
SiO₂ layer 20 nm /
ITO layer 98 nm /
SiO₂ layer 85 nm /
anti-contamination layer 5 nm /

Compared with the example of the conventional art having the structure above, the fourth example of the embodiment showed similar spectral transmittance in a range of 500-600 nm wavelengths, while transmittance improved by 12% with a short wavelength of 400 nm.

By the way, in the example of the embodiment corresponding to the third example, the same material is used for the high index of refraction oxide layers. However, the embodiment is not limited to it, and, for example, a top half of a transparent, high index of refraction oxide layer may be composed of an oxide film having a composition of 78 mol% In₂O₃ - 12 mol% SnO₂ - 10 mol% MgO, while the lower half may be composed of an oxide film having a composition of 75 mol% In₂O₃ - 12 mol% SnO₂ - 7 mol% MgO - 6 mol% TiO₂. In such an instance, similar to the second example of the embodiment, six of the cathodes 107 may be used, as shown in Fig. 2.

### Fifth Example of the Embodiment

An AR film having the following structure has been manufactured as another example of the embodiment corresponding to the first example of the anti-reflection film structure of the present invention:
PET base 188 µm /
Hard-coat layer 6 µm /
SiOₓ layer 5 nm /
ZrO₂ layer 18 nm /
SiO₂ layer 28 nm /
Nb₂O₅ layer 112 nm /
SiO₂ layer 85 nm /
Anti-contamination layer 5 nm /

Sputtering conditions for parts of the structure described above, except for ZrO₂, are the same as the first example of the embodiment.

Furthermore, a Zr metal target is used for the ZrO₂ part with a 40 KHz alternating current applied between two pieces of Zr targets on dual magnetron cathodes, with a Ar : oxygen gas volume ratio of 1 : 1 and a gas pressure of 0.3 Pa.

Even when a part of the high index of refraction layers is thus replaced by a material other than Nb₂O₅, such as ZrO₂, it has been found that reflectance characteristics similar to the first example of the embodiment can be obtained. Furthermore, the deposition rate for the ZrO₂ film, is one fourth of the deposition rate for the Nb₂O₅ layer, when compared at a bias power density of 15 W/cm², and thickness of the layer using ZrO₂ is less than or equal to one sixth of the layer using Nb₂O₅. When a continuous deposition takes place in the film sputtering system, such as shown in Fig. 2, the film roll rate would be limited by the deposition rate of the Nb₂O₅ layer, which is the thickest, and, therefore, there would not be a significant difference in terms of productivity. For this reason, it is evident that the thinner layers among the high index of refraction layers can be replaced with layers composed of Ta₂O₅, TiO₂, ZrO₂, ThO₂, Si₃N₄, or Y₂O₃ without adversely affecting the advantages of the present invention.

On the other hand, the present invention is useful for depositions made on an organic substrate that is commonly known as a plastic plate, the thickness of which, for example, is greater than or equal to 300 µm, although the discussions so far have mainly focused on depositions on thin organic substrate films. Furthermore, the anti-reflection layer of the present invention would be effective for preventing reflections of a substrate surface such as a transparent, acrylic resin molded part or a product trademarked as ARTON (JSR Corp.). A plastic substrate with an anti-reflection layer can be obtained by forming the anti-reflection layer in a similar manner on top of these plastic substrates.

Furthermore, similar to the AR films described above, the adhesion strength to the organic substrate can be improved dramatically by forming an oxide layer of one of the materials chosen from a selection of ZrOₓ (where x = 1-2), TiOₓ (where x = 1-2), SiOₓ (where x = 1-2), SiOₓN_{y} (where x = 1-2 and y = 0.2-0.6) and CrOₓ (where x = 0.2-1.5) by a reactive sputtering method using metallic or alloy targets such as Zr, Ti, Si, and Cr.

Furthermore, similar to the description above, the adhesion strengths of the optical layers can be improved with the reactive sputtering method while achieving an increased hardness even when the hard-coat layer is formed on the organic substrate. The deposition rate for the AR layer improves by twofold to threefold, compared with the conventional TiO₂ being used, when at least a part of the high index of refraction layers is the Nb₂O₅ layer deposited by the reactive sputtering method, according to the present invention, similar to the previous descriptions. When using these plastic substrates, a sputtering system for a hard substrate, such as for glasses, should, of course, be used, instead of the sputtering system for rolled films, shown in Fig. 2.

### Sixth and Seventh Examples of the Embodiment

The present examples of the embodiment are related to AR films on which inorganic moisture barrier layers are formed.

An inorganic moisture barrier layer, that is 2 µm in thickness and consisting of SiO₂ and Al₂O, is formed by a sputtering method on a surface of a 188 µm thick PET (polyethylene terephthalate) base, on which a 5 µm thick organic hard-coat is formed.

Furthermore, an anti-reflection layer (Nb₂O₅: 15 nm / SiO₂: 28 nm / Nb₂O₅: 112 nm / SiO₂: 85 nm), composed of SiO₂ and Nb₂O₅, is formed on top, and, furthermore, an anti-contamination layer is formed. The inorganic moisture barrier layer here is formed by adjusting the composition ratios between SiO₂ and Al₂O₃, so that the resulting index of refraction would be similar to the acrylic hard-coat layer at approximately 1.5-1.6. In other words, using an alloy target having an Si and Al weight mixture ratio of 1 : 3.9, is used for reactive sputtering in an Ar - 50% oxygen gas atmosphere for forming this film.

The anti-reflection film (sixth example of the embodiment), having the inorganic moisture barrier film thus manufactured, achieves a visible reflectance of 0.3% at 450-650 nm wavelengths.

Next, on a 188 µm thick PET (polyethylene terephthalate), on the surface of which is formed a 5 µm thick organic hard-coat, an inorganic moisture barrier layer, that is 4 µm in thickness and composed of SiO₂ and Al₂O₃, is formed using a method similar to the sixth example of the embodiment, and the AR layer and the anti-contamination layer are formed similarly to the method described in the sixth example of the embodiment. The seventh example of the embodiment is thus made.

For the sake of comparison, a sample has also been produced, in which a 3 nm thick SiOₓ layer is formed on the hard-coat layer without forming an inorganic moisture barrier layer, and an anti-reflection layer composed of SiO₂ and Nb₂O₅ (Nb₂O₅: 15 nm / SiO₂: 28 nm / Nb₂O₅: 112 nm /SiO₂: 85 nm) is formed on top (comparison example).

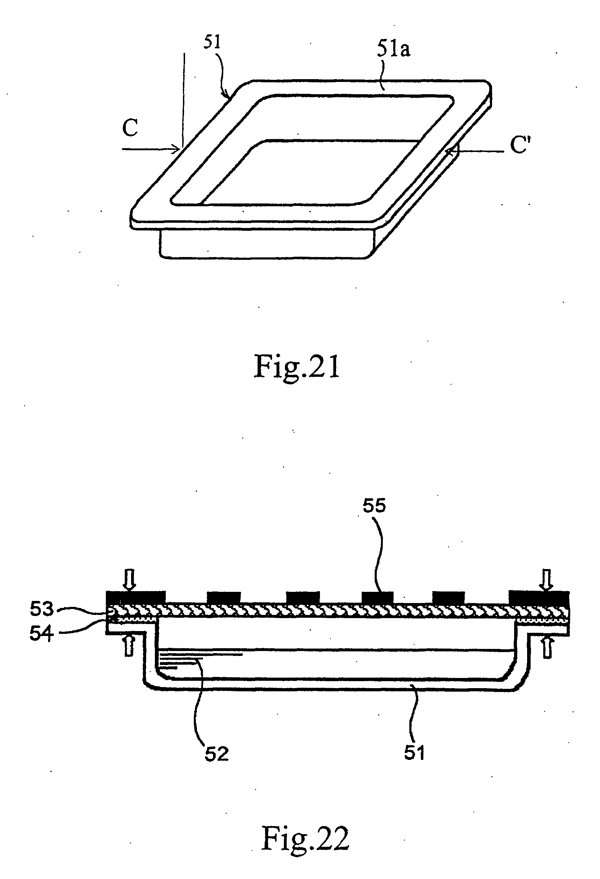

A container 51, made of stainless steel, shown in Fig. 21, is prepared for the comparison of moisture permeability of these three samples against a conventional glass substrate. This container 51 is formed by welding 5 mm thick stainless steel plates for an internal volume of 200 × 200 × 80 mm and includes a flange. 800 cc of DI water 52 is added to the inside of this container 51, an AR film with inorganic moisture barrier layer is pasted on the flange part 51a, and the container opening is sealed. The AR film 53 is pasted on the flange part 51a with a UV curable seal process using a moisture-resistant UV curable adhesive 54.

Fig. 22 shows a cross-section across a line C-C' in Fig. 20 for illustrating the conditions under which moisture permeability is compared after the sealing process. A lattice-shaped supporting plate 55, made of stainless steel, is placed on top of the AR film 53, and a horseshoe-shaped screw clamp is used for holding and applying pressure along the direction of the arrow, which is the direction in which the supporting plate provides support.

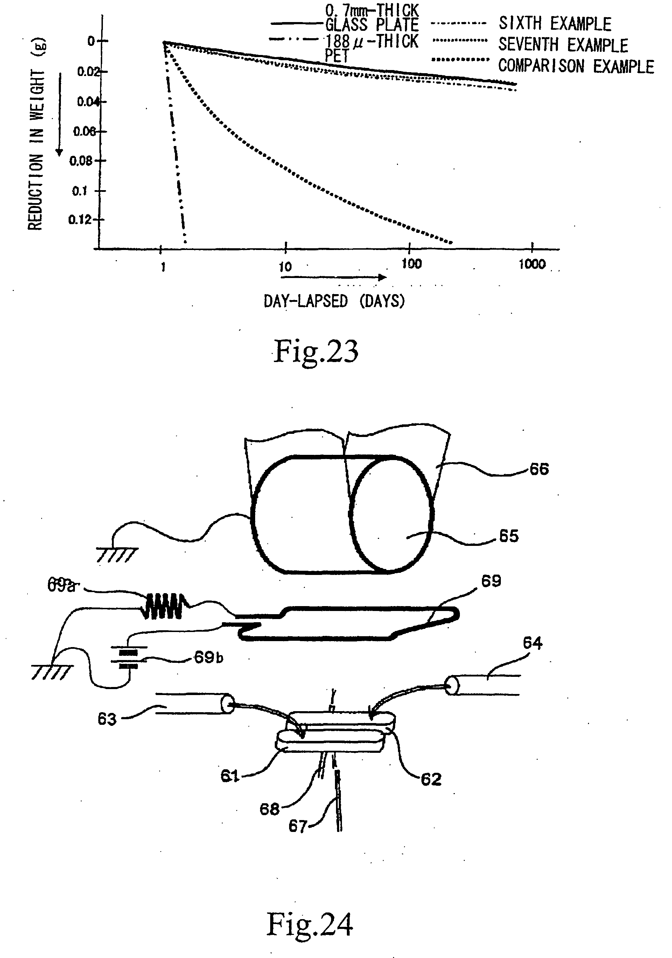

With three types of samples and a 0.7 mm thick glass plate, identical stainless steel containers, that have been sealed, are prepared for aging at 100°C under an atmospheric pressure. The initial weights of the stainless steel containers, as well as the weights at various time points in the aging process, are precisely measured for each sample and the glass plate. Fig. 23 shows the recorded changes in weight. With aging at 100°C, pressure inside the stainless steel containers rises, and moisture is released as permeation accelerates. Furthermore, because the samples and the glass are clamped onto the flange parts in the stainless steel containers using the cured adhesive in a similar manner, it should be possible to compare the moisture permeation through the various sample films and the glass by comparing the relative rates of weight losses.

Fig. 23 shows that the reduction in weight is larger, when the stainless steel container is sealed using the AR film of the sample for comparison and the 188 µm thick PET, compared with the stainless steel containers sealed using the sixth example of the embodiment and the seventh example of the embodiment. Furthermore, the rates of weight reduction due to moisture losses by permeation from stainless steel containers sealed with the sixth example of the embodiment and the seventh example of the embodiment are both the same as the sample, the stainless steel container of which is sealed with the 0.7 mm glass plate. In other words, a weight reduction due to the release of moisture by permeation from the flange part of the stainless steel containers, sealed using the UV curable adhesive, is the same for the sixth example of the embodiment, the seventh example of the embodiment, and the 0.7 mm glass plate. Almost no release of moisture is observed for the sixth example of the embodiment and the seventh example of the embodiment, as with the 0.7 mm thick glass.

These results make it evident that the anti-reflection films of the sixth example of the embodiment and the seventh example of the embodiment offer anti-reflection capability, pencil hardness, and resistance to moisture.

Furthermore, in yet another example of the present invention, a layer, consisting of SiO₂ and Al₂O₃, that is 4 µm in thickness, can be formed as the inorganic moisture barrier layer by an ionized, two-element vapor phase deposition method, as shown in Fig. 24, on a surface of a 188 µm thick PET, on which a 5 µm thick organic hard-coat is formed. In other words, in Fig. 24, a SiO₂ ingredient is placed in a crucible 61, an Al₂O₃ ingredient is placed in a crucible 62, and electron beams from electron guns 63 and 64, each of which is provided for the crucible 61 and 62, respectively, are controlled for controlling the temperatures to which the crucibles for the SiO₂ and Al₂O₃ are heated, respectively, in order to deposit a film, having a 1 : 3.4 weight ratio between SiO₂ and Al₂O₃, on a film 66, which runs over a cleaning drum 65, by vapor deposition.

At this weight ratio, a film having an index of refraction of 1.55 with a mixture of SiO₂ and Al₂O₃ has been formed. The electron guns 63 and 64 for the vapor deposition of SiO₂ and Al₂O₃ are under 30 kV acceleration voltages. By the way, in order to promote adequate bonding with oxygen, oxygen gas nozzle pipes 67 and 68 are placed near the crucibles. Furthermore, a + 250 V voltage bias is applied on a positive-potential, ionizing ring 69, which is made of platinum, to which a resistance 69a and a direct current power supply 69b are connected, in order to ionize and make the SiO₂ and Al₂O₃ vaporizing from the crucibles 61 and 62 acquire positive charges. Furthermore, SiO₂ and Al₂O₃ films that stick to the positive-potential ionizing ring 69 are vaporized by resistance heating in order to avoid deposition accumulation and ensure that the process continues to progress. Furthermore, an HCD method (hollow cathode discharge) or an URT-IP method (J. Vac. Soc. Jpn. Vol. 44, No. 4, 2001 418-427, 435-439), which have been reported as the various methods of ion plating, may also be used.

Furthermore, while the anti-reflection layer (SiOₓ: 3 nm / Nb₂O₅: 15 nm / SiO₂: 28 nm / Nb₂O₅: 12 nm / SiO₂: 85 nm), composed of SiO₂ and Nb₂O₅, offers a superior structure in terms of low reflectance and high deposition rates as an anti-reflection layer, the present invention by no means excludes film structures, in which a part or all of Nb₂O₅ is replaced by another material having a high index of refraction. In other words, the thin Nb₂O₅ layer may be replaced with Ta₂O₅, ZrO₂, Si₃N₄, or TiO₂, or even with oxide materials having a high index of refraction composed of mixed oxide materials like ITO and MgO or Al₂O₃ to realize a film that offers both the performance required for an anti-reflection film, as well as a resistance to moisture.

Furthermore, in the examples of embodiments described above, the hard-coat layer, inorganic moisture barrier layer, and anti-reflection layer are all placed on one side of the PET base, but a hard-coat layer such as polymethyl metacrylate (PMMA), silicon acrylate, and other acrylate materials, that have been UV cured, offer superior properties as barriers, because they offer superior surface smoothness without many bumps on their surfaces and allow growth of a dense inorganic oxide layer, when a SiO₂-Al₂O₃ mixed inorganic oxide layer is grown. However, when the hard-coat layer used as an undercoat for forming an inorganic moisture barrier layer on a surface opposite from the surface on which the AR layer is formed, it would not have to offer a hardness exceeding 3H, because it is not placed on the surface side of the display. In other words, as long as the surface smoothness is ensured, pencil hardness would not be a requisite property. A hard-coat layer, having a higher concentration of silicon smoothing component, may be used for ensuring smoothness, while the concentration of acrylate may be reduced. Although pencil hardness would be higher, when the anti-reflection layer and the inorganic moisture barrier layer are formed on the same side of the base film, it is also possible to realize an AR film of the present invention that combines resistance to moisture and a pencil hardness of 3-4 H, even when the inorganic moisture barrier layer and anti-reflection layer are formed on opposite sides.

Furthermore, the materials for the inorganic moisture barrier layer can be a sputtered film or vapor deposition film composed of SiOₓ, SiOₓN_{y}, Si₃N₄, SiₓN_{y}, AlₓO_{y} or AlOₓN_{y}, in addition to SiO₂ and Al₂O₃.

As described above, according to the invention of Claim 1, a colorless, highly transparent anti-reflection film available at a low cost can be provided by using the Nb₂O₅ film as the transparent, high index of refraction oxide layers.

Furthermore, according to the invention of Claim 2, a colorless, highly transparent, low cost, and highly reliable anti-reflection film, having a superior hardness and adhesion strength, can be provided by depositing an oxide layer with superior adhesion to the hard-coat layer on a base with a hard-coat layer.

According to the invention of Claim 3, a colorless, highly transparent, and low cost anti-reflection film, which has an effect of antistatic, can be provided, when a transparent, high index of refraction oxide layer made of Nb₂O₅ and a transparent, high index of refraction oxide layer, composed of a metallic oxide film of at least one of In₂O₃ or SNO₂ is laminated on an Nb₂O₅ film.

Furthermore, according to the inventions of Claim 4 and Claim 5, a colorless, highly transparent anti-reflection film, having an effect of antistatic, can be provided at low cost by including a transparent, high index of refraction oxide layer, composed of Nb₂O₅, and a transparent, high index of refraction oxide layer that is made of at least one type of metallic oxide component, which is either In₂O₃ or SNO₂, to which an oxide material component of at least one element from a choice of Si, Mg, Al, Zn, Ti, or Nb is added.

According to the invention of Claim 6, an AR (anti-reflection) film structure with a high sputtering deposition rate and a strong adhesion strength can be provided that offers an increased degree of freedom with the choice of material for the high index of refraction layers other than the high index of refraction layer consisting of Nb₂O₅.

According to the invention of Claim 7, a colorless, transparent, and low cost plastic substrate with an anti-reflection layer can be obtained, even when the present invention is applied on a plastic substrate having a thickness of greater than or equal to 300 µm or on a substrate, such as a plastic substrate, on the surface of which a hard-coat layer is formed.

On the other hand, according to the inventions of Claim 8 through Claim 13, a superior resistance to moisture and gases can be ensured with an anti-reflection film using a substrate made of an organic material, and thus eliminating a need for a glass substrate. Nor are the optical characteristics adversely affected. As a result, the display can be made thinner and lighter. Furthermore, according to the invention of Claim 14, the advantages of the invention of Claim 1 are provided in addition to the above.

Furthermore, according to the inventions of Claim 15 and Claim 16, a plastic substrate with an anti-reflection layer, offering superior optical properties, resistance to moisture and gases, and low costs, can be obtained by an application on a substrate, composed of an organic material, such as a plastic substrate, or a plastic substrate on which a hard-coat layer is formed on the surface.

## Claims

1. An anti-reflection film comprising a hard-coat layer formed on a substrate, and laminated layers of transparent, high index of refraction oxide layers and transparent, low index of refraction oxide layers laminated on top of each other on the hard-coat layer, **characterized in that** at least one of the transparent, high index of refraction oxide layers comprises an Nb₂O₅ layer formed by a reaction sputtering method.

2. The anti-reflection film of Claim 1 **characterized in that** an oxide layer comprising at least one material ZrOₓ (where x = 1-2), TiOₓ (where x = 1-2), SiOₓ (where x = 1-2), SiOₓN_{y} (where x = 1-2, y = 0.2-0.6) and CrOₓ (where x = 0.2-1.5) is deposited by the reactive sputtering method on top of the hard-coat layer.

3. The anti-reflection film of Claim 1 **characterized in that** at least one of the other transparent, high index of refraction oxide layers comprises at least one type of metallic oxide film selected from In₂O₃ and SnO₂, as well as a film comprising Nb₂O₅.

4. The anti-reflection film of Claim 1 **characterized in that** at least one of the other transparent, high index of refraction oxide layers contains as a main component a metallic oxide material of at least one selected from In₂O₃ and SnO₂ and includes an oxide film that contains oxide components of at least one element selected from a group of Si, Mg, Al, Zn, Ti, and Nb having equivalent concentration levels of greater than or equal to 5 mol% and less than or equal to 40 mol% in a form of SiO₂, MgO, Al₂O₃, ZnO, TiO₂, and Nb₂O₅.

5. The anti-reflection film of Claim 4 **characterized in that** said oxide film contains said oxide components having equivalent concentration level of greater than or equal to 10 mol% and less than or equal to 30 mol% in a form of SiO₂, MgO, Al₂O₃, ZnO, TiO₂, and Nb₂O₅.

6. The anti-reflection film of Claim 1 **characterized in that**, out of the transparent, high index of refraction oxide layers, at least one layer, except for the Nb₂O₅ layer, is formed by a layer selected from a group of Ta₂O₅, TiO₂, ZrO₂, ThO₂, Si₃N₄, and Y₂O₃.

7. A plastic substrate with an anti-reflection layer comprising an anti-reflection layer which is formed by depositing one after another transparent, high index of refraction oxide layers and transparent, low index of refraction oxide layers on top of each other on a plastic substrate or on a plastic substrate with a hard-coat layer formed on a surface thereof, **characterized in that** at least one of the transparent, high index of refraction oxide layers comprises an Nb₂O₅ layer formed by a reactive sputtering method.

8. An anti-reflection film comprising an anti-reflection layer comprising transparent, high index of refraction oxide layers and transparent, low index of refraction oxide layers laminated on top of each other on a substrate comprising an organic material, and an inorganic moisture barrier layer, having an index of refraction close to the organic material, is formed in contact with at least one side of the substrate.

9. The anti-reflection film of Claim 8 **characterized in that** said inorganic moisture barrier layer is formed between said substrate and said anti-reflection layer.

10. The anti-reflection film of Claim 8 **characterized in that** a hard-coat layer is formed on said substrate, and said anti-reflection film is formed on top thereof.

11. The anti-reflection film of Claim 8 **characterized in that** said substrate comprising said organic material has a structure in which a layer for changing surface quality is formed by a wet coating method on a surface of a base film comprising an organic material.

12. The anti-reflection film of Claim 8 **characterized in that** said inorganic moisture barrier layer has as a main component at least one selected from a group of SiO₂, SiOₓ, SiOₓN_{y}, Si₃N₄, SiₓN_{y}, Al₂O₃, AlₓO_{y}, and AlOₓN_{y} (where x and y are arbitrary integers).

13. The anti-reflection film of Claim 8 **characterized in that** said inorganic moisture barrier layer has an index of refraction of 1.4-2.1.

14. The anti-reflection film of Claim 8 **characterized in that** at least one of the transparent, high index of refraction oxide layers in the anti-reflection layer comprises an Nb₂O₅ layer formed by a reactive sputtering method.

15. A plastic substrate with an anti-reflection layer comprising an anti-reflection layer formed by laminating on top of each other transparent, high index of refraction oxide layers and transparent, low index of refraction oxide layers on a plastic substrate or on a plastic substrate having a hard-coat layer formed on a surface thereof, **characterized in that** an inorganic layer, having an index of refraction similar to the plastic substrate, is formed in contact with at least one side of the plastic substrate.

16. The plastic substrate with the anti-reflection layer of Claim 15 **characterized in that** at least one of the transparent, high index of refraction oxide layers in said anti-reflection layer comprises an Nb₂O₅ layer formed by a reactive sputtering method.

## Amended claims

### Amended claims under Art. 19.1 PCT

**1.** An anti-reflection film comprising a hard-coat layer formed on a substrate, and laminated layers of transparent, high index of refraction oxide layers and transparent, low index of refraction oxide layers laminated on top of each other on the hard-coat layer, **characterized in that** at least one of the transparent, high index of refraction oxide layers comprises an Nb₂O₅ layer formed by a reaction sputtering method.

**2.** The anti-reflection film of Claim 1 **characterized in that** an oxide layer comprising at least one material ZrOₓ (where x = 1-2), TiOₓ (where x = 1-2), SiOₓ (where x = 1-2), SiOₓN_{y} (where x = 1-2, y = 0.2-0.6) and CrOₓ (where x = 0.2-1.5) is deposited by the reactive sputtering method on top of the hard-coat layer.

**3.** The anti-reflection film of Claim 1 **characterized in that** at least one of the other transparent, high index of refraction oxide layers comprises at least one type of metallic oxide film selected from In₂O₃ and SnO₂, as well as a film comprising Nb₂O₅.

**4.** The anti-reflection film of Claim 1 **characterized in that** at least one of the other transparent, high index of refraction oxide layers contains as a main component a metallic oxide material of at least one selected from In₂O₃ and SnO₂ and includes an oxide film that contains oxide components of at least one element selected from a group of Si, Mg, Al, Zn, Ti, and Nb having equivalent concentration levels of greater than or equal to 5 mol% and less than or equal to 40 mol% in a form of SiO₂, MgO, Al₂O₃, ZnO, TiO₂, and Nb₂O₅.

**5.** The anti-reflection film of Claim 4 **characterized in that** said oxide film contains said oxide components having equivalent concentration level of greater than or equal to 10 mol% and less than or equal to 30 mol% in a form of SiO₂, MgO, Al₂O₃, ZnO, TiO₂, and Nb₂O₅.

**6.** The anti-reflection film of Claim 1 **characterized in that**, out of the transparent, high index of refraction oxide layers, at least one layer, except for the Nb₂O₅ layer, is formed by a layer selected from a group of Ta₂O₅ , TiO₂ , ZrO₂, ThO₂, Si₃N₄, and Y₂O₃.

**7.** A plastic substrate with an anti-reflection layer comprising an anti-reflection layer which is formed by depositing one after another transparent, high index of refraction oxide layers and transparent, low index of refraction oxide layers on top of each other on a plastic substrate or on a plastic substrate with a hard-coat layer formed on a surface thereof, **characterized in that** at least one of the transparent, high index of refraction oxide layers comprises an Nb₂O₅ layer formed by a reactive sputtering method.

**8.** An anti-reflection film comprising an anti-reflection layer comprising transparent, high index of refraction oxide layers and transparent, low index of refraction oxide layers laminated on top of each other on a substrate comprising an organic material, and an inorganic moisture barrier layer, having an index of refraction close to the organic material, is formed in contact with at least one side of the substrate.

**9.** The anti-reflection film of Claim 8 **characterized in that** said inorganic moisture barrier layer is formed between said substrate and said anti-reflection layer.

**10.** The anti-reflection film of Claim 8 **characterized in that** a hard-coat layer is formed on said substrate, and said anti-reflection film is formed on top thereof.

**11.** The anti-reflection film of Claim 8 **characterized in that** said substrate comprising said organic material has a structure in which a layer for changing surface quality is formed by a wet coating method on a surface of a base film comprising an organic material.

**12.** (Amended) The anti-reflection film of Claim 8 **characterized in that** said inorganic moisture barrier layer has as a main component at least one selected from a group of SiO₂, SiOₓ (where x = 1-2), SiOₓN_{y} (where x = 0-2, y = 1.33-0) , Si₃N₄, SiₓN_{y} (where x = 1-1.33), Al₂O₃, AlₓO_{y} (where x = 0-1.0, y = 0-1.5), and AlOₓN_{y} (where x = 0-1.5, y = 0-1).

**13.** The anti-reflection film of Claim 8 **characterized in that** said inorganic moisture barrier layer has an index of refraction of 1.4-2.1.

**14.** The anti-reflection film of Claim 8 **characterized in that** at least one of the transparent, high index of refraction oxide layers in the anti-reflection layer comprises an Nb₂O₅ layer formed by a reactive sputtering method.

**15.** A plastic substrate with an anti-reflection layer comprising an anti-reflection layer formed by laminating on top of each other transparent, high index of refraction oxide layers and transparent, low index of refraction oxide layers on a plastic substrate or on a plastic substrate having a hard-coat layer formed on a surface thereof, **characterized in that** an inorganic layer, having an index of refraction similar to the plastic substrate, is formed in contact with at least one side of the plastic substrate.

**16.** The plastic substrate with the anti-reflection layer of Claim 15 **characterized in that** at least one of the transparent, high index of refraction oxide layers in said anti-reflection layer comprises an Nb₂O₅ layer formed by a reactive sputtering method.
